# EUROPÄISCHE PATENTANMELDUNG

(11) **EP 3 316 194 A1**
(43) Veröffentlichungstag der Anmeldung: **02.05.2018**
(21) Anmeldenummer: 17001706.5
(22) Anmeldetag: 17.10.2017
(51) Int. Cl.: G06Q 10/06

(54) **VERFAHREN ZUR DATENERFASSUNG MIT EINEM DATENERFASSUNGS-SYSTEM UND DATENERFASSUNGS-SYSTEM**

(30) Priorität: 26.10.2016 DE 102016012903
(71) Anmelder: Testo SE & Co. KGaA, 79853 Lenzkirch (DE)
(72) Erfinder: Münzer, Markus, 78183 Hüfingen (DE); Schaumann, Jens, 78052 Villingen-Schwenningen (DE)
(74) Vertreter: Börjes-Pestalozza, Henrich

(57) **Zusammenfassung**

Ein Datenerfassungs-System (1) mit einer Messvorrichtung (5) zur Erfassung von Messwerten einer Messgröße und mit einer Mitteilungsvorrichtung (7) zur Mitteilung von Informationen weist eine Lesevorrichtung (4) zum Lesen von Identifikatoren (33) und eine Datenverarbeitungsvorrichtung (2) zur Ausführung von wenigstens einem Ablaufprogramm auf, das durch Messwerte der Messvorrichtung (5) und/oder durch Identifikatoren (502) steuerbar ist. Durch Lesen eines Start-Identifikators (503) wird ein zugeordnetes Ablaufprogramm (601) gestartet, in dem Ablaufprogram (601) wird mindestens eine Benutzeraktion (604) und/oder eine Mitteilung (603) ausgeführt und auf eine abgeschlossene Benutzeraktion (604) oder Mitteilung (603) folgt eine weitere Benutzeraktion (604) oder Mitteilung (603) oder das Ablaufprogramm (501) wird beendet (605), wobei in jeder Benutzeraktion (604) eine Benutzereingabe erwartet wird, die Benutzereingabe als Benutzeraktions-Ergebnis zwischengespeichert wird und die Benutzeraktion (604) abgeschlossen wird, wobei eine Benutzereingabe durch Lesen eines Identifikators (502) mit der Lesevorrichtung (4) und/oder durch Erfassen einer Messgröße mit der Messvorrichtung (5) erfolgt. (Fig. 2)

## Beschreibung

Die Erfindung befasst sich mit einem Verfahren zur Datenerfassung mit Datenerfassungs-Systemen, die in Kontrollprozessen verwendet werden und einem Datenerfassungs-System zur Anwendung dieses Verfahrens.

Kontrollprozesse dienen in der Regel dazu bestimmte Eigenschaften von Produkten oder Produktionsumgebungen zu überprüfen und zu dokumentieren sowie bei bestimmten Bedingungen Handlungen auszuführen.

Solche Kontrollprozesse sind in der Regel durch Gesetze oder andere Vorschriften vorgegeben. Sie legen bestimmte Handlungen fest, die in bestimmter Weise und/oder zu bestimmten Anlässen durchgeführt werden müssen.

Dadurch ist für jeden Kontrollprozess oder Kontrollvorgang genau festgelegt, in welcher Reihenfolge welche Handlung durchgeführt werden muss.

Ein solcher Kontrollprozess ist beispielsweise ein Wareneingang von verpackten Tiefkühlprodukten. Hier muss, zumindest an Stichproben, geprüft werden, ob eine Verpackung der Ware beschädigt ist und ob die Temperatur der Ware eine Mindest-Temperatur nicht übersteigt. Ist ein geprüftes Produkt zu warm und/oder ist seine Verpackung beschädigt, muss es entsorgt werden. Alle Messwerte und andere Daten müssen mit Bezug auf die kontrollierte Ware dokumentiert werden. Auf diese Weise kann die Einhaltung der Kühlkette oder anderer gesetzlicher Vorschriften auch nachträglich nachgewiesen werden.

Weitere Kontrollprozesse gibt es in zahlreichen Varianten, wobei neben der Temperatur auch andere Messgrößen von einem Messgerät erfasst werden können.

Zur korrekten Durchführung eines Kontrollprozesses sind verschiedene Hilfsmittel bekannt. Zur Datenerfassung in dem oben genannten Kontrollprozess ist ein Thermometer notwendig, mit dem die Temperatur gemessen werden kann.

Weiterhin muss die Temperatur und eventuelle Schäden einer Verpackung dokumentiert werden. Dazu gibt es beispielsweise Kontrollkarten, die schrittweise Handlungsanweisungen für die in der Kontrolle durchzuführenden Handlungen enthalten. Diese Handlungsanweisungen können beispielsweise in Form einer Tabelle oder einzelnen Datenblättern in Papier vorliegen, die mit den Messwerten eines Messgerätes und anderen Informationen von Hand ausgefüllt werden. Für jedes zu testende Produkt oder für jeden Kontrollvorgang ist dann eine solche Karte auszufüllen.

In der Regel werden die so erfassten Daten nachträglich vom Papier in einen zentralen Datenspeicher übertragen. Hier kann eine Auswertung und/oder weitere Verknüpfung zu anderen Daten oder Informationen erfolgen. Die Übertragung der handschriftlichen Daten ist meist nur manuell möglich, so dass hier ein enormer Zeitaufwand entsteht.

Um eine manuelle oder anderweitige Datenerfassung der auf Papier enthaltenen Daten zu umgehen, ist auch der Einsatz eines Computers, Smartphones oder Tablets denkbar, der eine digitale Repräsentation der Tabelle oder der Datenblätter enthält, die dann an einem Bildschirm ausgefüllt werden können. Die Messwerte des Messgerätes werden dabei am Bildschirm oder per Tastatur eingegeben. Auf diesem Wege stehen die Daten direkt in digitaler Form zur Verfügung und können einfacher in einen Datenspeicher übertragen werden. Eine nachträgliche Datenerfassung ist dabei nicht mehr notwendig. Neben dem Computer oder Tablet muss aber immer auch noch mindestens ein Messgerät gehandhabt werden, was umständlich ist.

Darüber hinaus gibt es zahlreiche Kontrollprozesse, bei denen eine Verwendung eines Computers oder Tablets nicht möglich oder nicht sinnvoll ist. Dies ist insbesondere in feuchten, nassen, heißen oder kalten Umgebungen der Fall.

Aufgabe der Erfindung ist es daher ein Verfahren zur Datenerfassung mit einem Datenerfassungs-System, das die Durchführung von solchen Kontrollprozesse vereinfacht und ein Datenerfassungs-System, das in allen Umgebungen verwendbar ist, zu schaffen.

Diese Aufgabe wird durch ein Verfahren mit den Merkmalen des Anspruch 1 und ein Datenerfassungs-System nach Anspruch 9 gelöst.

Das erfindungsgemäße Verfahren ist dabei insbesondere dadurch gekennzeichnet, dass durch Lesen eines Start-Identifikators mit einer Lesevorrichtung ein in einer Datenverarbeitungsvorrichtung zugeordnetes Ablaufprogramm gestartet wird, in dem Ablaufprogramm mindestens eine Mitteilung ausgeführt wird und auf eine Mitteilung oder Benutzeraktion eine weitere Benutzeraktion oder Mitteilung folgt oder das Ablaufprogramm beendet wird, wobei eine Benutzeraktion auf eine Eingabe wartet, die durch Lesen eines Identifikators mit der Lesevorrichtung oder durch Erfassen eines Messwertes mit einer Messvorrichtung erfolgt und die Eingabe die Benutzeraktion abschließt.

Ein Identifikator im Sinne der Erfindung ist eine maschinell les-, unterscheid- und auswertbare Information. Der Lesevorgang ist dabei nicht an ein bestimmtes physikalisches Prinzip gebunden und kann optisch, elektrisch oder auf andere Weise erfolgen.

Als einfacher optischer Identifikator kann beispielsweise eine Fläche angesehen werden, die schwarz oder weiß ist, wodurch zwei Informationen optisch unterscheidbar sind. Die Lesevorrichtung kann in diesem Fall aus einer einfachen Fotodiode oder einem Fotowiderstand bestehen.

Um mehr als zwei Informationen optisch unterscheiden zu können, sind beispielsweise Barcodes, QR-Codes oder digitales Papier bekannt, die in mehreren Hell-Dunkel-Feldern Informationen in kodierter Form enthalten. Anstelle der Hell-Dunkel-Felder könnten Informationen auch durch verschiedene Farben kodiert sein. Als Lesevorrichtung kann hier beispielswiese ein Fotosensor oder eine Digitalkamera dienen.

Neben diesen optischen Identifikatoren sind auch beliebige andere Identifikatoren denkbar. So könnten beispielsweise elektrisch kodierte Identifikatoren unterschiedliche elektrische Widerstände aufweisen. Eine Lesevorrichtung könnte in diesem Fall zwei elektrische Kontakte zur Durchleitung eines konstanten Stromes durch den Identifikator aufweisen. Die am Widerstand abfallende Spannung kann dann zur Unterscheidung dienen. Weitere Identifikatoren können magnetisch kodiert sein, um mit Hilfe eines oder mehrerer Hall-Sensoren ausgelesen zu werden.

Ein Ablaufprogramm der Datenverarbeitungsvorrichtung kann eine Repräsentation eines Kontrollprozesses darstellen und dient der Datenerfassung anhand dieses Kontrollprozesses. Die im Kontrollprozess festgelegten Handlungsanweisungen sind in den Benutzeraktionen und Mitteilungen des Ablaufprogrammes wiedergespiegelt. Somit bildet das Ablaufprogramm eine Schritt-für-Schritt Abarbeitung eines Kontrollprozesses nach und entspricht daher einer in Papierform vorliegenden Prozesskarte.

Die Identifikatoren enthalten kodierte Informationen, die verschiedenen Funktionen zugeordnet sein können. Beispielsweise wird ein Identifikator, dem das Starten eines Ablaufprogramms zugeordnet ist, als Start-Identifikator bezeichnet.

Ein Identifikator, der zur Eingabe einer Antwort dient, wird als Antwort-Identifikator bezeichnet.

Daneben können den Identifikatoren weitere Funktionen zugeordnet sein.

In einer Weiterbildung der Erfindung ist die Zuordnung der Funktionen zu den Identifikatoren dynamisch und/oder vom Ablaufprogramm abhängig. Dabei kann die Funktion eines Identifikators auch von der aktuellen Ausführung eines Ablaufprogrammes abhängig sein. Ein Start-Identifikator kann beispielsweise innerhalb einer Benutzeraktion als Antwort-Identifikator betrachtet werden. In einem anderen Ablaufprogramm kann wiederum eine davon unabhängige Funktion definiert sein. Dabei ist es auch möglich, dass

Erfindungsgemäß ist nun jeweils ein Ablaufprogramm der Datenverarbeitungsvorrichtung einem Identifikator zugeordnet. Durch Lesen eines Start-Identifikators wird die Ausführung dieses zugeordneten Ablaufprogrammes gestartet.

Das Ablaufprogramm besteht erfindungsgemäß aus einer Abfolge von Benutzeraktionen und/oder Mitteilungen, die für einen bestimmten Kontrollprozess abgearbeitet werden müssen.

Eine Mitteilung ist eine Information, die durch die Mitteilungsvorrichtung wiedergegeben wird. Eine Mitteilung ist nach der Wiedergabe automatisch beendet.

Eine Benutzeraktion beinhaltet eine Mitteilung einer Handlungsanweisung auf die eine Benutzereingabe folgen muss. Das Ablaufprogramm wartet daher nach der Mitteilung der Handlungsanweisung auf diese Benutzereingabe bis diese erfolgt ist. Alternativ kann auch ein Nichterfolgen nach einer Wartezeit als Eingabe gewertet werden, so dass ein Ablaufprogramm nach einer Zeit beendet wird.

Die Benutzereingabe erfolgt erfindungsgemäß durch Lesen eines Antwort-Identifikators und/oder durch Erfassen eines Messwertes mit der Messvorrichtung. Die Benutzereingabe wird als Benutzeraktions-Ergebnis zwischengespeichert und die Benutzeraktion beendet.

Auf eine beendete Benutzeraktion oder Mitteilung folgt eine weitere Benutzeraktion oder Mitteilung oder das Ablaufprogramm wird beendet.

Ein Ablaufprogramm kann durch Aneinanderreihen von mehreren Benutzeraktionen und/oder Mitteilungen zur Datenerfassung an beliebige Kontrollprozesse angepasst werden.

Der entscheidende Vorteil beim erfindungsgemäßen Verfahren besteht darin, dass die Datenerfassung schnell und einfach durch Identifikatoren und/oder das Erfassen von Messwerten erfolgt. Auf eine Tastatur oder spezielle Tasten oder einen großen Bildschirm zur Darstellung kann daher vollständig verzichtet werden. Die Identifikatoren können je nach der verwendeten Technik auf einer Papierablaufkarte vorliegen, so dass in Anwendung und Ergonomie das erfindungsgemäße Verfahren zu bestehenden manuellen Verfahren mit Ablaufkarten vergleichbar ist.

Alle Benutzeraktions-Ergebnisse liegen bereits in elektronisch verarbeitbarer Form vor und können in einem Datenspeicher gespeichert werden. Eine nachträgliche Erfassung oder Digitalisierung der Daten entfällt daher.

Die Benutzereingabe ist durch die Verwendung von Identifikatoren sehr einfach und robust gegenüber Umgebungseinflüssen. Durch die Verwendung von entsprechenden Identifikatoren kann das Verfahren auch in feuchten, nassen, kalten oder heißen Umgebungen angewandt werden. Die Datenerfassung ist damit wesentlich einfacher und effizienter möglich.

In einer zweckmäßigen Ausführung der Erfindung werden alle Benutzeraktions-Ergebnisse des Ablaufprogramms zu einem Ablauf-Ergebnis miteinander verknüpft. Somit ist eine Es kann zweckmäßig sein, wenn zusätzlich zu den Benutzeraktions-Ergebnissen oder den Ablauf-Ergebnissen eine Positionsinformation und/oder Angaben zum Datum und/oder der Uhrzeit und/oder des Orts der Benutzereingabe und/oder zusätzliche Informationen verknüpft oder gespeichert werden. Dadurch kann eine nachträgliche Auswertung oder Zuordnung der erfassten Daten einfacher und schneller erfolgen. Eine zusätzliche Information kann beispielsweise eine Produkt-, Chargen- oder Typennummer sein.

Prinzipiell kann die Abfolge von Benutzeraktionen und/oder Mitteilungen im Ablaufprogramm fest vorgegeben sein. Dabei werden Benutzeraktionen nacheinander abgearbeitet, wie es im zugrundeliegenden Kontrollprozess vorgegeben ist.

Daneben ist es auch möglich, dass der Programmablauf dynamisch verzweigt wird, in dem er vom Ergebnis einer vorhergehenden Benutzeraktion abhängig ist. Somit kann im Programmablauf auf bestimmte Benutzeraktions-Ergebnisse reagiert werden.

Eine Datenerfassung entspricht in der Regel einer Ausführung eines Ablaufprogrammes. Das bedeutet, dass nach Beenden des Ablaufprogrammes die erfassten Daten zu einem Ablauf-Ergebnis zusammengefasst werden, wie oben beschrieben.

In einer zweckmäßigen Ausführung einer Erfindung kann eine Datenerfassung aber auch aus mehreren Ablaufprogrammen bestehen. Ein Ablauf-Ergebnis liegt erst dann vor, wenn alle zusammengehörenden Ablaufprogramme abgearbeitet sind. Dieses Datenerfassungs-Ende kann entweder automatisch erkannt werden, sobald alle benötigten Daten erfasst sind. Das ist in der Regel der Fall, wenn alle zugehörigen Ablaufprogramme abgearbeitet sind.

Es kann aber auch zweckmäßig sein, wenn durch Einlesen eines Abschluss-Identifikators ein Abschluss-Ablaufprogramm gestartet wird, das eine Datenerfassung abschließt. In diesem Abschluss-Ablaufprogramm werden die Benutzeraktions- und/oder Ablauf-Ergebnisse der vorhergehend ausgeführten Ablaufprogramme zu einem gesamt Ablauf-Ergebnis zusammengefasst.

Darüber hinaus ist es zweckmäßig, wenn alle zwischengespeicherten Benutzeraktions-Ergebnisse und/oder Ablauf-Ergebnisse an einen Datenspeicher übertragen werden. Insbesondere kann diese Datenübertragung innerhalb des Abschluss-Ablaufprogrammes erfolgen.

In einer vorteilhaften Weiterbildung kann durch Einlesen eines Hilfe-Identifikators ein Hilfe-Ablaufprogramm gestartet werden, das Hilfe-Informationen durch die Mitteilungsvorrichtung mitteilt. Somit könnte beispielsweise zu den Ablaufprogrammen weitere Hinweise zur Vorgehensweise oder zum Zweck mitgeteilt werden.

Ebenso ist es vorteilhaft, wenn durch Einlesen eines Parameter-Identifikators Betriebsparameter eines Ablaufprogramms einstellbar sind.

Die Handlungsanweisungen können in verschiedenen Formen vorliegen. Besonders vorteilhaft ist es jedoch, wenn die Mitteilungsvorrichtung zur akustischen Mitteilung der Handlungsanweisungen ausgebildet ist. In diesem Fall ist es zweckmäßig, wenn in einem Konfigurationsschritt als akustische Information aufgezeichnet wird, die als akustische Mitteilung für eine Handlungsanweisung gespeichert wird.

Darüber hinaus kann es vorteilhaft sein, wenn eine aufgezeichnete akustische Information mit einem Ergebnis einer Benutzeraktion verknüpft und/oder gespeichert wird. Dadurch ist es beispielsweise möglich, gesprochene Kommentare zu einer Datenerfassung hinzuzufügen.

Neben dem erfindungsgemäßen Verfahren zur Datenerfassung beschreibt die Erfindung ein Datenerfassungs-System mit dem das Verfahren durchgeführt werden kann.

Die Erfindung umfasst weiterhin ein Datenerfassungs-System, mit einer Messvorrichtung zur Erfassung von Messwerten einer Messgröße, mit einer Lesevorrichtung zum Lesen von Identifikatoren, mit einer Mitteilungsvorrichtung zur Mitteilung von Informationen, mit einer Datenverarbeitungsvorrichtung zur Ausführung von wenigstens einem Ablaufprogramm, das durch Messwerte der Messvorrichtung und/oder durch Identifikatoren steuerbar ist, und mit einem Datenspeicher zum Speichern von Ergebnissen des Ablaufprogramms.

Die Messvorrichtung kann beispielsweise ein Thermometer, ein Spannungs-, Strom- oder Leistungsmessgerät, ein Helligkeitssensor, ein Schallpegelmessgerät oder ein beliebiges anderes Messgerät sein. Die Messvorrichtung ist daher nicht auf die Erfassung einer bestimmten Messgröße beschränkt.

Das Datenerfassungs-System kann auch mehrere verschiedene Messvorrichtungen aufweisen, so dass mehrere Messgrößen erfasst werden können.

In einer vorteilhaften Ausführung der Erfindung weist das Datenerfassungs-System als Messvorrichtung einen Temperatursensor, insbesondere einen Einstichtemperaturfühler, auf. Mit diesem Temperatursensor ist die Erfassung von einer Temperatur möglich.

Ein Einstichtemperaturfühler ermöglicht die Ermittlung von Temperaturen im Inneren von zu überprüfenden Waren oder Produkten. So kann bei der Wareneingangskontrolle beispielsweise eine Temperatur im Inneren der Tiefkühlware erfasst werden. Auf diese Weise lässt sich feststellen, ob die Ware durchgängig die vorgeschriebene Temperatur aufweist.

Die Mitteilungsvorrichtung des Datenerfassung-Systems dient zur Mitteilung von Informationen an den Benutzer. Diese Informationen können Handlungsanweisungen oder sonstige Hinweise oder Mitteilungen umfassen.

In einer vorteilhaften Ausführung der Erfindung weist das Datenerfassung-System als Mitteilungsvorrichtung einen Lautsprecher zur Mitteilung von akustischen Informationen auf. Auf diese Weise erhält der Benutzer alle Mitteilungen in akustischer Form. Der Vorteil dabei ist, dass das Datenerfassung-System keinerlei optische Anzeige benötigt und daher auch ohne Sichtkontakt bedienbar ist. Gerade weil die Benutzereingabe ausschließlich über die Lesevorrichtung und/oder die Messvorrichtung erfolgt, werden keine weiteren Bedienelemente benötigt. Das Datenerfassung-System kann daher sehr klein und kompakt gestaltet sein.

Das Datenerfassung-System ist daher auch einfacher für verschiedene Umgebungsbedingungen anpassbar, so dass eine Verwendung in feuchten, nassen, heißen oder kalten Umgebungen problemlos möglich ist.

In einer weiteren vorteilhaften Ausführung kann das Datenerfassung-System eine Anzeige zur optischen Darstellung von Informationen aufweisen. Diese optische Darstellung kann beispielsweise die Handlungsanweisungen, die durch die Messvorrichtung erfassten Messwerte oder andere Informationen beinhalten.

Das Datenerfassung-System kann auch mehrere dedizierte optische Anzeigen aufweisen, beispielsweise separate Leuchtanzeigen für verschiedene Zustände oder Informationen.

In einer besonders vorteilhaften Ausführung der Erfindung weist das Datenerfassung-System eine optische Anzeige und einen Lautsprecher auf, so dass Mitteilungen optisch und/oder akustisch mitteilbar sind. Insbesondere weist das Datenerfassung-System eine Anzeige zur Darstellung der Messwerte der Messvorrichtung auf.

Wie bereits erwähnt kann die Lesevorrichtung zum Lesen von beliebigen Identifikatoren ausgebildet sein.

In einer besonders vorteilhaften Ausführung der Erfindung weist die Lesevorrichtung einen optischen Sensor zum Lesen von optischen Identifikatoren auf, insbesondere von Strichcodes, QR-Codes oder digitalem Papier. Optische Identifikatoren können auf einfache Weise den bisher verwendeten Papierprozesskarten hinzugefügt werden, so dass diese in Form und Gestalt nahezu beibehalten werden können.

Dabei ist die Verwendung von digitalem Papier besonders vorteilhaft, da die dabei verwendeten Identifikatoren für das menschliche Auge nicht sichtbar sind. Eine damit ausgestattete Papier-Prozesskarte unterscheidet sich daher nicht Wesentlich von den bisher verwendeten Prozesskarten zur manuellen Datenerfassung.

Eine weitere vorteilhafte Ausführung eines DatenerfassungSystems weist ein Mikrofon zur Erfassung von akustischen Informationen auf. Die akustischen Informationen können als Benutzeraktions-Ergebnis dienen oder mit einer solchen verknüpft werden. Dadurch wäre beispielsweise ein gesprochener Kommentar zu einem Messwert, etwa einer Temperaturmessung, aufnehmbar. Die akustische Information kann aber auch wie ein Messwert als Benutzeraktions-Ergebnis interpretiert und abgespeichert werden.

Weiterhin ist es möglich, dass die akustischen Informationen als gesprochene Handlungsanweisungen für die einzelnen Ablaufprogramme verwendet werden. Auf diese Weise können Handlungsanweisungen individuell eingelernt werden.

Ein erfindungsgemäßes Datenerfassungs-System kann grundsätzlich in einem einzigen Geräte vereint sein. Ein solches Datenerfassungs-System ist dann alleine betreibbar.

Es ist jedoch vorteilhaft, wenn das Datenerfassungs-System ein mobiles Messgerät und eine stationäre Einheit aufweist.

Insbesondere vorteilhaft ist es, wenn das mobile Messgerät die Messvorrichtung und/oder die Mitteilungsvorrichtung und/oder die Lesevorrichtung aufweist und die stationäre Einheit den Datenspeicher und/oder die Datenverarbeitungsvorrichtung aufweist.

Dadurch kann das Messgerät klein und handlich ausgebildet sein, so dass eine einfache Handhabung möglich ist. Der Datenspeicher in einer stationären Einheit kann daher groß und leistungsfähig ausgebildet sein, wodurch eine ausreichende Kapazität und eine Anbindung an eine EDV-Infrastruktur leicht möglich ist. Darüber hinaus ist es dadurch einfach möglich, mehrere mobile Messgeräte an einem zentralen Datenspeicher zu betreiben. Auf diese Weise kann eine Datenerfassung mit mehreren mobilen Messgeräten parallel erfolgen.

Zur Übertragung der Daten zwischen mobilem Messgerät und stationärer Einheit ist eine beliebige drahtgebundene oder drahtlose Schnittstelle vorhanden.

In einer zweckmäßigen Ausführung der Erfindung besitzt die stationäre Einheit eine oder mehrere sogenannte Docking-Stationen, in die ein mobiles Messgerät eingesetzt werden kann, wodurch eine drahtgebundene Verbindung zwischen mobilem Messgerät und stationärer Einheit geschlossen wird.

Insbesondere zweckmäßig ist es jedoch, wenn das Datenerfassungs-System eine drahtlose Übertragungseinheit aufweist, mit der Daten zwischen dem mobilen Messgerät und der stationären Einheit austauschbar sind. Dazu weisen bevorzugt das mobile Messgerät und die stationäre Einheit jeweils eine Sende- und Empfangseinheit auf, mit denen eine drahtlose Datenverbindung aufbaubar ist. Diese Datenverbindung kann dauerhaft bestehet, so dass ad hoc Daten übertragen werden können.

Es ist jedoch auch möglich und vorgesehen, dass eine Datenverbindung nur dann aufgebaut wird, wenn Daten übertragen werden sollen, insbesondere bei Ausführung eines Abschluss-Ablaufprogramms oder vor dem Beenden eines Ablaufprogramms.

Insbesondere ist das erfindungsgemäße Datenerfassungs-System zur Verwendung in einem zuvor beschriebenen erfindungsgemäßen Verfahren ausgebildet.

Die Erfindung ist nachfolgend anhand eines Ausführungsbeispiels mit Bezug auf die beiliegenden Zeichnungen näher erläutert.

Es zeigt:
- Fig. 1: eine Blockdarstellung einer ersten Ausführung eines erfindungsgemäßen Datenerfassungs-Systems,
- Fig. 2: eine Blockdarstellung einer Ausführung eines erfindungsgemäßen Datenerfassungs-Systems mit einem mobilen Messgerät und einer stationären Einheit,
- Fig. 3: eine Blockdarstellung einer weiteren Ausführung eines erfindungsgemäßen Datenerfassungs-Systems mit einem mobilen Messgerät und einer stationären Einheit,
- Fig. 4: eine Schrägdarstellung eines Einstichthermometers als erfindungsgemäßes Datenerfassungs-Systems,
- Fig. 5: eine schematische Darstellung einer Ablaufkarte mit drei Identifikatoren,
- Fig. 6: ein allgemeines Flussdiagramm eines Ablaufprogramms,
- Fig. 7: ein Flussidagramm eines beispielhaften Ablaufprogrammes,
- Fig. 8: eine beispielhafte Ablaufkarte mit digitalem Papier für einen Kontrollprozess mit zwei verschiedenen Ablaufprogrammen,
- Fig. 9: ein Flussdiagramm für ein erstes beispielhaftes Ablaufprogramm der Ablaufkarte,
- Fig. 10: ein Flussdiagramm für ein zweites beispielhaftes Ablaufprogramm der Ablaufkarte und
- Fig. 11: ein Flussdiagramm für ein beispielhaftes Abschluss-Ablaufprogramm.

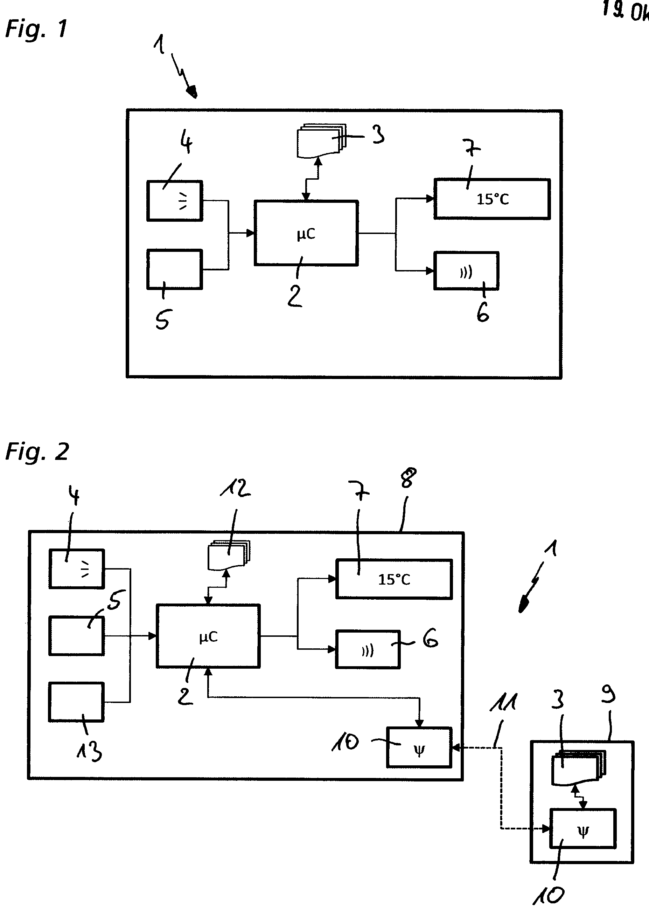

Die Fig. 1 zeigt eine Blockdarstellung eines im Ganzen mit 1 bezeichneten erfindungsgemäßen Datenerfassungs-Systems.

Das Datenerfassungs-System 1 weist eine Datenverarbeitungsvorrichtung 2 auf, die zur Ausführung eines Betriebsprogramms und verschiedenen Ablaufprogrammen ausgebildet ist.

Die Datenverarbeitungsvorrichtung 2 ist im Beispiel als Mikrocontroller ausgebildet. Der Mikrocontroller ist mit einem Datenspeicher 3 verbunden, in dem Messdaten oder andere Daten eines Ablaufprogramms zwischengespeichert werden können. Dieser Datenspeicher 3 kann auch im Mikrocontroller integriert sein. Das Betriebsprogramm und/oder die Ablaufprogramme sind im Mikrocontroller oder in dem Datenspeicher 3 oder in einem weiteren separaten nichtflüchtigen Speicher abgelegt.

Zur Datenerfassung weist das Datenerfassungs-System 1 eine Lesevorrichtung 4 zum Lesen von Identifikatoren auf. Die Lesevorrichtung 4 ist mit der Datenverarbeitungsvorrichtung 2 verbunden. Über die Identifikatoren wird die Ausführung der Ablaufprogramme der Datenverarbeitungsvorrichtung 2 gesteuert und Daten eingegeben.

Das Datenerfassungs-System 1 weist weiter eine Messvorrichtung 5 zur Erfassung von Messwerten einer Messgröße auf. Die Messgröße kann eine beliebige physikalische Größe sein, beispielsweise eine Temperatur, eine elektrische Leitfähigkeit, eine Helligkeit, eine Strömungsgeschwindigkeit, eine Spannung, eine Durchflussmenge oder ein Schallpegel. Es ist auch denkbar, dass das Datenerfassungs-System 1 mehrere Messvorrichtungen für unterschiedliche Messgrößen aufweist.

Das Datenerfassungs-System 1 weist als Mitteilungsvorrichtung einen Lautsprecher 6 auf, über den akustische Mitteilungen wiedergegeben werden können. Diese Mitteilungen können beispielsweise gesprochene Handlungsanweisungen oder Signaltöne beinhalten.

Zusätzlich weist das Datenerfassungs-System 1 im Beispiel noch eine optionale Anzeige 7 zur optischen Darstellung von Mitteilungen auf. Hier kann beispielsweise ein mit der Messvorrichtung erfasster Messwert dargestellt werden. Diese Anzeige 7 kann ein grafischer Bildschirm sein, in dem verschiedene Mitteilungen universell darstellbar sind. Zusätzlich oder alternativ können eine oder mehrere diskrete Leuchtanzeigen vorhanden sein, die jeweils nur eine Information anzeigen.

Prinzipiell ist eine Mitteilungsvorrichtung für die erfindungsgemäße Funktion ausreichend. Wobei es unwesentlich ist, ob eine akustische oder optische Mitteilungsvorrichtung vorhanden ist. Eine rein akustische Mitteilungsvorrichtung besitzt den Vorteil, dass das Datenerfassungs-System 1 kleiner und kompakter ausgebildet sein kann.

In Fig. 2 ist eine alternative Ausführung eines erfindungsgemäßen Datenerfassungs-Systems 1 gezeigt, das im Wesentlichen dem Datenerfassungs-System 1 der Fig. 1 entspricht.

In dieser Ausführung ist das Datenerfassungs-System 1 jedoch zweiteilig ausgebildet und weist ein mobiles Messgerät 8 und eine stationäre Einheit 9 auf.

Die stationäre Einheit 9 weist in dieser Ausführung einen Datenspeicher 3 auf, in dem alle erfassten Daten gespeichert werden. Die stationäre Einheit 9 kann mit weiteren Vorrichtungen zum Verarbeiten oder Darstellen der Daten verbunden sein, die jedoch nicht Teil des erfindungsgemäßen Datenverarbeitungs-Systems 1 sind, etwa einem Computernetzwerk. Der Datenspeicher 3 dient auch als Archiv, in dem die Daten dauerhaft oder zumindest für eine gewisse Dauer gespeichert sind, so dass jederzeit darauf zurückgegriffen werden kann.

Die stationäre Einheit 9 und das mobile Messgerät 8 weisen jeweils eine Sende-/Empfangseinheit 10 auf, mit der eine Datenverbindung 11 herstellbar ist, über die Daten übertragen werden können. Die Datenverbindung 11 ist vorzugsweise drahtlos, kann jedoch selbstverständlich auch drahtgebunden ausgebildet sein. Dabei muss die Datenverbindung 11 nicht dauerhaft bestehen, sondern kann vorzugsweise nur aufgebaut werden, wenn tatsächlich Daten übertragen werden sollen.

Durch die Trennung des Datenspeichers 3 in eine separate, stationäre Einheit 9, kann ein mobiles Messgerät 8 wesentlich kleiner und handlicher ausgebildet sein.

Insbesondere ist es auch möglich, mehrere mobile Messgeräte 8 zu betreiben, deren Daten allen in dem Datenspeicher 3 zentral verwaltet werden können.

Der im mobilen Messgerät 8 vorhandene Datenspeicher dient in dieser Ausführung nur als Zwischenspeicher 12 für erfasste Daten bis zur nächsten Datenübertragung und kann dementsprechend kleiner dimensioniert sein. Daten in diesem Zwischenspeicher 12 können nach einer Datenübertragung an den Datenspeicher 3 der stationären Einheit 8 gelöscht werden.

Darüber hinaus weist das mobile Messgerät 8 in dieser Ausführung ein optionales Mikrofon 13 auf, zur Erfassung von akustischen Informationen. Diese akustischen Informationen können als Eingabe mit den erfassten Daten gespeichert werden. Mit dem Mikrofon 13 können auch akustische Handlungsanweisungen für die Ablaufprogramme aufgezeichnet werden.

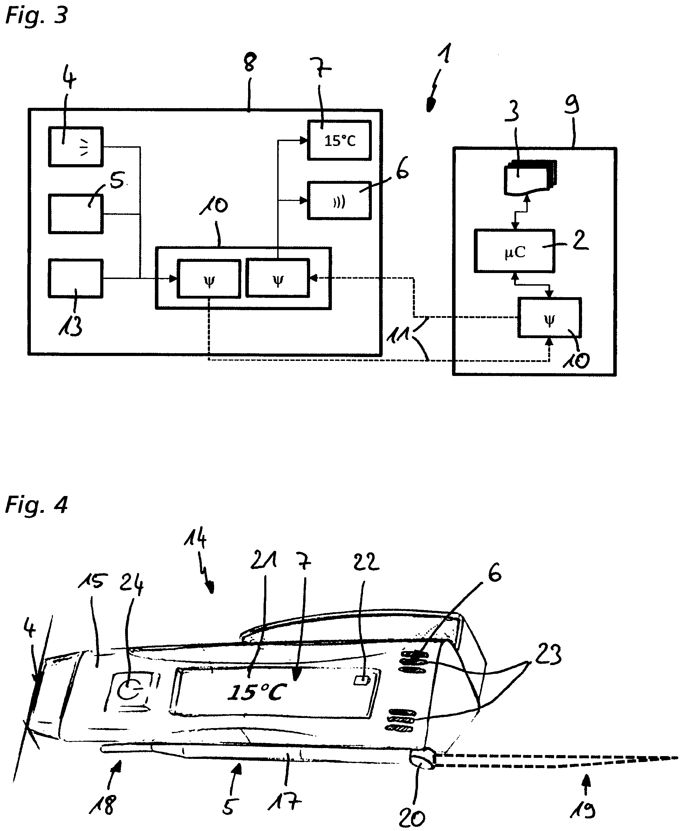

Eine weitere alternative Ausführung der Erfindung ist in Fig. 3 gezeigt. Auch hier ist das Datenerfassungs-System 1 zweiteilig ausgebildet und weist ein mobiles Messgerät 8 und eine stationäre Einheit 9 auf.

Das mobile Messgerät 8 dient hier lediglich zur Datenerfassung und zur Darstellung. Es weist zur Datenerfassung eine Lesevorrichtung 4, eine Messvorrichtung 5 und ein Mikrofon 13 auf, sowie als Mitteilungsvorrichtungen eine optische Anzeige 7 und einen Lautsprecher 6.

Die stationäre Einheit 9 weist hier, zusätzlich zur stationären Einheit der Fig. 2, eine Datenverarbeitungsvorrichtung 2 auf, die mit dem Datenspeicher 3 und der Sende-/Empfangseinheit 10 verbunden ist.

Über jeweils eine Sende-/Empfangseinheit 10 ist eine Datenverbindung 11 zwischen mobilem Messgerät 8 und stationärer Einheit 9 herstellbar. Diese Datenverbindung 11 ist vorzugsweise drahtlos, kann jedoch auch drahtgebunden sein.

Die von der Lesevorrichtung 4, der Messvorrichtung 5 und dem Mikrofon 13 erfassten Daten werden über die Datenverbindung 11 zur Datenverarbeitungsvorrichtung 2 in der stationären Einheit 9 übertragen und in einem dort ablaufenden Ablaufprogramm verarbeitet. Mitteilungen werden über die Datenverbindung 11 an das mobile Messgerät 8 übermittelt und dort in der Anzeige 7 dargestellt oder über den Lautsprecher 6 mitgeteilt. Die gesamte Datenverarbeitung erfolgt somit in der stationären Einheit 9. Zum Betrieb ist daher eine dauerhafte und stabile Datenverbindung 11 notwendig.

Um dies zu verdeutlichen ist in der Fig. 3 die Sende-/Empfangseinheit 10 getrennt in Sendeeinheit 14 und Empfangseinheit 15 dargestellt.

Das mobile Messgerät 8 kann bei dieser Ausführung sehr einfach und kostengünstig ausgebildet sein.

Neben den hier gezeigten beispielhaften Ausführungen sind auch andere Ausführungen des erfindungsgemäßen Datenerfassungs-Systems möglich. Es ist beispielsweise denkbar, dass auch die Lesevorrichtung und die Messvorrichtung jeweils in separaten mobilen Geräten angeordnet sind. Weiterhin ist es denkbar, dass mehrere Messvorrichtungen und/oder mehrere Mitteilungsvorrichtungen vorhanden sind. Die Erfindung ist daher in keiner Weise auf die gezeigten Ausführungen beschränkt.

Die Fig. 4 zeigt ein Einstichthermometer 14 als Beispiel für ein mobiles Messgerät eines erfindungsgemäßen Datenerfassungs-Systems 1 nach Fig. 2. Das Einstichthermometer 14 ist als Handgerät ausgebildet und besitzt ein etwa quaderförmiges Gehäuse 15. Das Gehäuse 15 weist einen Federclip 16 auf, mit dem das Einstichthermometer 14 beispielsweise in einer Jackentasche oder an einem Klemmbrett befestigbar ist.

Das Einstichthermometer 14 besitzt einen stabförmigen Temperaturfühler 17, der an einem Angelpunkt 20 zwischen einer Ruheposition 18 und einer Arbeitsposition 19, in Fig. 4 durch gestrichelte Linie angedeutet, klappbar ist. In der Ruheposition 18 liegt der Temperaturfühler 17 parallel am Gehäuse 15 an. In Arbeitsposition 19 steht er in Längsrichtung vom Gehäuse 15 ab, so dass er in ein zu testendes Objekt einstechbar oder einführbar ist.

Alternativ wäre auch ein feststehender Temperaturfühler möglich, wobei das Messgerät dann bei Nichtgebraucht nicht so kompakt verstaubar wäre. Der Temperaturfühler könnte auch ausfahrbar innerhalb des Gehäuses angeordnet sein. Bei einer Anwendung im Lebensmittelbereich würden dann aber eventuell Lebensmittelreste in das Gehäuse gelangen.

Das Einstichthermometer 1 weist weiter eine Anzeige 7 auf, in der ein vom Temperaturfühler 17 erfasster Temperaturwert 21 angezeigt werden kann. Die Anzeige 17 kann auch weitere Informationen, beispielsweise ein Batteriezustand 22, darstellen.

Zusätzlich weist das Einstichthermometer 1 noch einen Lautsprecher zur Mitteilung von akustischen Informationen und Handlungsanweisungen auf. Der Lautsprecher ist innerhalb des Gehäuses 15 angeordnet und in der Fig. 4 nicht sichtbar. Das Gehäuse 15 weist mehrere Schallöffnungen 23 auf, durch die der Schall des Lautsprechers nach außen dringen kann.

Über einen Schalter oder Taster 24 am Gehäuse 15 lässt sich das Einstichthermometer 1 ein- oder ausschalten. Weitere Bedienelemente sind nicht vorgesehen oder notwendig, da die Steuerung hauptsächlich über Identifikatoren erfolgt.

Dazu besitzt das Einstichthermometer 1 eine Lesevorrichtung 4 zum Lesen von optischen Identifikatoren. Im Beispiel weist das Lesegerät 4 einen optischen Sensor auf, der zum Lesen von digitalem Papier ausgebildet ist. Auf digitalem Papier sind die optischen Identifikatoren in Form von Punktrastern kodiert. Digitales Papier und deren Lesevorrichtungen sind im Stand der Technik hinreichend bekannt und werden hier daher nicht näher behandelt. Anstelle des digitalen Papiers können auch Strichcodes oder QR-Codes als optische Identifikatoren verwendet werden.

Im Beispiel ist die Lesevorrichtung 3 an einer Schmalseite des Gehäuses 15, gegenüber der Klapplagerung 20 des Temperaturfühlers 17 angeordnet. Selbstverständlich sind auch andere Gehäuseformen und andere Positionen der Lesevorrichtung möglich.

Das gezeigte Einstichthermometer 14 ist für Kontrollprozesse an Lebensmitteln ausgelegt, insbesondere für die Wareneingangskontrolle von verpackter Tiefkühlware. Die Erfindung ist jedoch in keiner Weise auf diese beispielhafte Anwendung beschränkt.

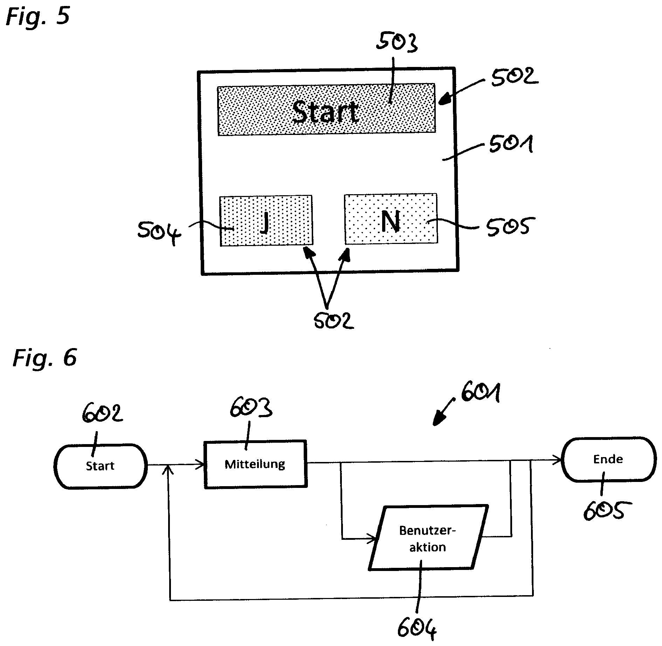

Die Fig. 5 zeigt eine schematische Ablaufkarte 501 für einen beispielhaften Prozess zur Datenerfassung mit einem erfindungsgemäßen Datenerfassungs-System 1, beispielsweise einem Einstichthermometer 14 nach Fig. 4. Die Ablaufkarte 501 ist als sogenanntes digitales Papier ausgebildet. Sie weist drei optische Identifikatoren 502 auf, die jeweils eine unterschiedliche Kodierung aufweisen, die in Fig. 5 durch unterschiedliche Muster angedeutet sind. Digitales Papier ist im Stand der Technik hinreichend bekannt, weshalb hier nicht auf weitere Einzelheiten der Kodierung eingegangen werden soll. Prinzipiell spielt die Art der Kodierung der Identifikatoren für die Erfindung auch keine Rolle. Es könnten hier auch QR-Codes oder einfache Barcodes als optische Identifikatoren verwendet werden.

Die Ablaufkarte 501 weist einen Start-Identifikator 503 und als Antwort-Indikatoren einen Ja-Identifikator 504 und einen Nein-Identifikator 505 auf. Die Identifikatoren 502 sind jeweils mit einer Funktion der Datenverarbeitungsvorrichtung 2 verknüpft. Das Lesen eines Identifikators 502 erfolgt durch zeigen der Lesevorrichtung 4 auf einen der Identifikatoren 502.

Die Identifikatoren 502 sind auf dem digitalen Papier durch das menschliche Auge nicht zu erkennen. Daher kann eine solche Ablaufkarte 501 oder Prozesskarte identisch zu einer rein manuellen Prozesskarte gestaltet sein. Die

Die Fig. 6 zeigt ein allgemeines Flussdiagramm eines Ablaufprogramms 601 zur erfindungsgemäßen Datenerfassung mit einem erfindungsgemäßen Datenerfassungs-System 1. Ein Ablaufprogramm 601 wird durch Lesen 602 eines Start-Identifikators 503 mit der Lesevorrichtung 4 gestartet. Läuft bereits ein Ablaufprogramm kann die Datenverarbeitungsvorrichtung 2 beispielsweise so eingerichtet sein, dass das erneute Lesen eines Start-Identifikator ignoriert wird oder das gerade laufende Ablaufprogramm abgebrochen und das dem neu gelesenen Start-Identifikator zugeordnete Ablaufprogramm gestartet wird. Es sind jedoch auch andere Aktionen denkbar.

Nach dem Start wird in jedem Ablaufprogramm 601 zunächst eine Mitteilung 603 ausgeführt. In einer Mitteilung 603 wird mittels einer Mitteilungsvorrichtung eine Mitteilung, Information oder eine Handlungsanweisung mitgeteilt. Dies kann beispielsweise optisch oder akustisch erfolgen.

Auf eine Mitteilung 603 kann eine erneute Mitteilung 603 folgen, das Ablaufprogramm 601 kann beendet werden 605 oder es folgt eine Benutzeraktion 604.

Eine Benutzeraktion 604 erwartet eine Eingabe, die durch Lesen eines Identifikators 502 einer Ablaufkarte 501 oder durch Erfassen eines Messwertes mit der Messvorrichtung 5 erfolgt. Die Ausführung des Ablaufprogramms 601 wartet solange, bis eine Eingabe erfolgt ist. Vorzugsweise erfolgt durch die vorhergehende Mitteilung 603 eine Handlungsanweisung, die erläutert, welche Art von Eingabe vorzunehmen ist. Die Eingabe wird als Benutzeraktions-Ergebnis zwischengespeichert.

Wenn keine Eingabe erfolgt, kann beispielsweise nach einer vorbestimmten Zeitspanne das Warten abgebrochen werden und ein vorbestimmter Standardwert als Benutzereingabe gewertet werden, um eine endlose Warteschleife zu verhindern.

Nach einer Benutzeraktion 604 folgt wieder eine Mitteilung 603 oder das Ablaufprogramm 601 endet 605.

Dabei können alle Benutzeraktions-Ergebnisse zu einem Ablauf-Ergebnis zusammengefasst werden.

Durch Aneinanderreihen von Mitteilungen 603 und/oder Benutzeraktionen 604 gemäß dem allgemeinen Flussidagramm ist ein Ablaufprogramm 601 auf einfache Weise an jeden beliebigen Prozess anpassbar. Die Datenerfassung kann somit auf sehr einfache Weise erfolgen. Durch die Eingabe mittels der Lesevorrichtung und/oder der Messvorrichtung liegen die erfassten Daten sofort in digitaler weiter verarbeitbarer Form vor. Eine nachträgliche, aufwändige Nacherfassung der Daten ist daher nicht notwendig.

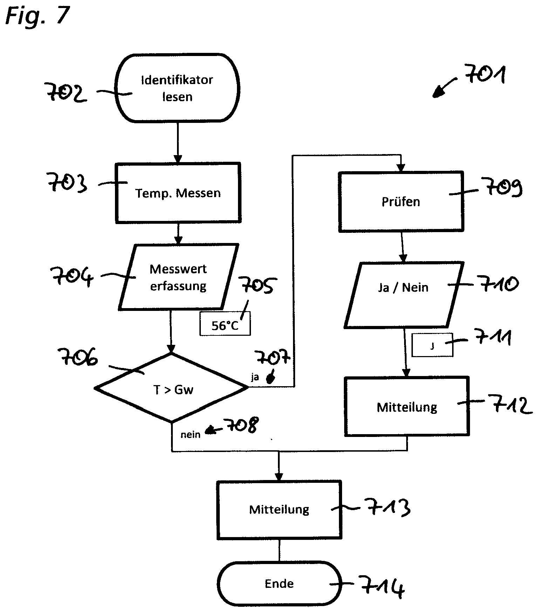

In Fig. 7 ist aufbauend auf dem allgemeinen Flussdiagramm eines Ablaufprogrammes 601 ein Flussdiagramm eines beispielhaften Ablaufprogramms 701 gezeigt. Durch Lesen 702 eines Start-Identifikators 503 wird das zugeordnete Ablaufprogramm 701 gestartet.

Im Beispiel weist das Ablaufprogramm 701 zunächst eine Handlungsanweisung 703 auf, die einen Benutzer anweist eine Temperatur zu messen. Es folgt eine Benutzeraktion 704, die auf das Erfassen einer Temperatur wartet. Ein Benutzer muss nun mittels der Messvorrichtung 5 eine Temperatur messen. Sobald der Messwert vorliegt, wird dieser als Benutzeraktions-Ergebnis 705 zwischengespeichert.

Die Abfolge der Mitteilungen und Benutzeraktionen ist in einem Ablaufprogramm fest vorgegeben oder kann dynamisch von mindestens einem Benutzeraktions-Ergebnis 705 abhängen.

Im gezeigten Beispiel weist das Ablaufprogramm 701 dazu eine bedingte Verzweigung 706 auf, die vom Benutzeraktions-Ergebnis 705 der vorhergehenden Benutzeraktion 704 abhängt. Im Beispiel wird als Bedingung geprüft, ob der zwischengespeicherte Temperaturmesswert 705 größer als ein festgelegter Grenzwert ist.

Falls die Bedingung erfüllt ist, wird das Ablaufprogramm in einen Ja-Zweig 707 verzweigt. Falls nicht, fährt das Ablaufprogramm in einem Nein-Zweig 708 fort. Neben solchen zweifachen Verzweigungen sind auch Bedingungen mit mehr als zwei Programmzweigen denkbar.

Im Ja-Zweig 707 folgt wieder eine Handlungsanweisung 709 zur Überprüfung eines Objekts. Es folgt eine Benutzeraktion 710, die diesmal eine Eingabe mittels der Lesevorrichtung 4 erwartet. Durch Lesen eines Identifikators 502 wird diese Eingabe abgeschlossen. Dem Identifikator 502 ist dabei im Ablaufprogramm ein bestimmter Wert zugeordnet, der als Benutzeraktions-Ergebnis 711 zwischengespeichert wird.

Darauf folgt eine Mitteilung 712 und das Ablaufprogramm kehrt zum Nein-Zweig 708 zurück.

Im Nein-Zweig 708 folgt eine weitere Mitteilung 713, bevor das Ablaufprogramm beendet wird 714.

Der Vorteil bei einem solchen erfindungsgemäßen Datenerfassungs-System besteht nun darin, dass alle Eingaben einfach mit einem einzigen Gerät vorgenommen werden können und kein weiterer

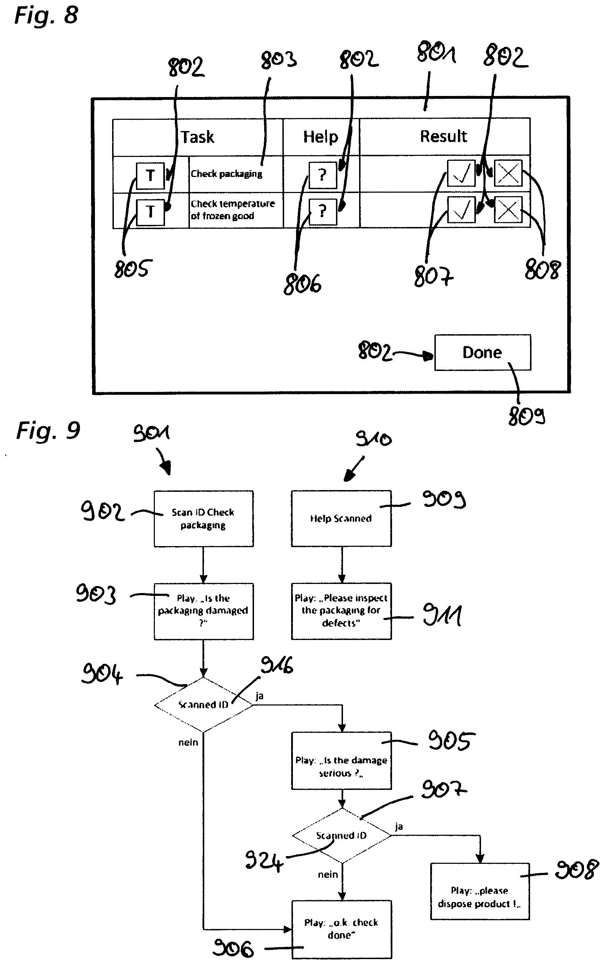

Die Fig. 8 zeigt nun beispielhaft eine Ablaufkarte 801 einer Wareneingangskontrolle von verpackter Tiefkühlware. Bei diesem Kontrollprozess muss zunächst die Verpackung der Ware überprüft werden. Wenn die Verpackung in Ordnung ist, muss auch die Temperatur der Ware gemessen werden. Das Ergebnis jedes Kontrollschrittes wird dokumentiert und für spätere Nachweiszwecke aufbewahrt.

Diese Wareneingangskontrolle wird beispielsweise mit einem Einstichthermometer 14 gemäß der Fig. 4 durchgeführt.

Die Ablaufkarte 801 ist als digitales Papier ausgebildet und weist mehrere optische Identifikatoren 802 auf, die mittels der Lesevorrichtung 4 eines erfindungsgemäßen Datenerfassungs-Systems 1 gelesen werden können.

Die Datenerfassung ist bei dieser Wareneingangskontrolle in zwei Teilprozesse aufgeteilt. Die Kontrolle der Verpackung 803 und die Kontrolle der Warentemperatur 804.

Beide Teilprozesse sind auf der Ablaufkarte 801 in jeweils einer Zeile einer Tabelle aufgedruckt.

Für jeden Teilprozess gibt es einen Start-Identifikator 805, einen Hilfe-Identifikator 806, als Antwort-Identifikatoren einen Ja-Identifikator 807 und einen Nein-Identifikator 808. Das Lesen eines Identifikators 33 erfolgt durch Anlegen der Lesevorrichtung 4 über einem Identifikator 33.

Den beiden Start-Identifikatoren 805 ist jeweils ein Ablaufprogramm der Datenverarbeitungsvorrichtung 2 zugeordnet.

Die Datenverarbeitungsvorrichtung 2 weist einen Grundzustand auf, in dem im Wesentlichen darauf gewartet wird, dass ein Identifikator 802 gelesen wird.

Wird in diesem Grundzustand einer der Start-Identifikatoren 805 gelesen, wird das zugeordnete Ablaufprogramm gestartet.

Die Fig. 9 zeigt das Ablaufprogramm 901 für den Teilprozess zur Kontrolle der Verpackung 803. Durch Lesen 902 des zugeordneten Start-Identifikators 805 im Grundzustand wird dieses Ablaufprogramm 901 gestartet. Es folgt eine erste Handlungsanweisung 903 in der ein Benutzer aufgefordert wird, eine Verpackung zu prüfen und anzugeben, ob diese Beschädigt ist. Diese Handlungsanweisung 903 wird gesprochen über den Lautsprecher 6 des Einstichthermometers 14 mitgeteilt. Das Ablaufprogramm 901 wartet dann auf eine Benutzereingabe 904.

Diese Benutzereingabe 904 erfolgt nun durch Lesen eines Ja-Identifikators 807 oder Nein-Identifikators 808 der Ablaufkarte 801 mittels der Lesevorrichtung 4. Dazu genügt es die Lesevorrichtung 4 auf einen Identifikator 802 zu halten. Das Ergebnis 916 dieser Benutzereingabe 904 wird in einem Datenspeicher 12 des Einstichthermometers 14 zwischengespeichert.

Ist das Ergebnis 916 der Benutzereingabe 904 "Nein", wird in einer folgenden Mitteilung 906 mitgeteilt, dass der Teilprozess 803 beendet ist, wodurch das Ablaufprogramm 901 endet.

Ist das Ergebnis 916 jedoch "Ja", folgt eine weitere Handlungsanweisung 905, in der gefragt wird, ob die Beschädigung schwerwiegend ist. Die erwartete Eingabe 907 erfolgt wiederum durch Lesen eines Ja-Identifikators 807 oder Nein-Identifikators 808.

Ist die Eingabe 924 "Ja", wird in einer folgenden Mittteilung 908 mitgeteilt, dass die Ware zu entsorgen ist oder bei "Nein", die Datenerfassung beendet ist 906.

In beiden Fällen endet das Ablaufprogramm 901. Die einzelnen Benutzer-Ergebnisse werden verknüpft gespeichert. Dazu können weitere Daten, beispielsweise die Uhrzeit, eine Seriennummer oder andere Informationen gespeichert werden.

Zusätzlich zum Start-Identifikator 805 besitzt jeder Teilprozess der Ablaufkarte 801 einen Hilfe-Identifikator 806. Durch Lesen 909 dieses Hilfe-Identifikators 806 wird ein Hilfe-Ablaufprogramm 910 gestartet. Darin wird eine Hilfe-Information 911 mitgeteilt, die den Teilprozess näher erläutert, beispielsweise genaue Informationen, ab wann eine Beschädigung schwerwiegend ist.

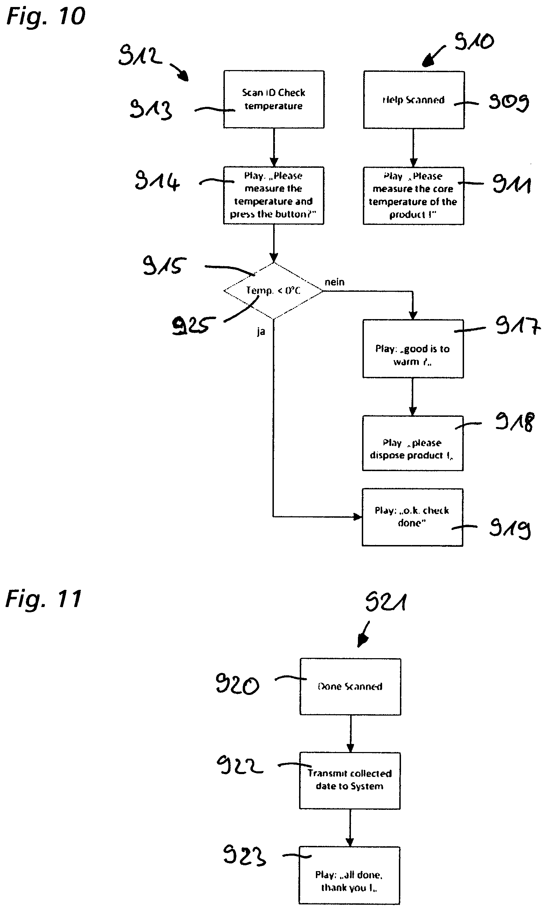

Ein Ablaufprogramm 912 des zweiten Teilprozesses zur Kontrolle der Warentemperatur 804 ist in Fig. 10 gezeigt. Durch Lesen 913 des entsprechenden Start-Identifikators 805 der Ablaufkarte 801 wird dieses Ablaufprogramm 912 gestartet. Es weist eine Handlungsanweisung 914 auf, die zum Messen der Temperatur der Tiefkühlware auffordert. Die folgende Benutzeraktion 915 erfolgt hier nun durch Messen der Temperatur mit der Messvorrichtung 5. Der Temperaturfühler 17 des Einstichthermometers 14 wird dazu in die Ware eingeführt und dort belassen, bis die Messung abgeschlossen ist. Der Start der Messung kann zusätzlich durch ein akustisches oder optisches Signal angezeigt werden. Das Ende der Messung kann beispielswiese automatisch erkannt werden, sobald sich der Messwert nicht mehr verändert. Der so erfasste Messwert 925 wird als Benutzer-Ergebnis zwischengespeichert.

In einer Verzweigung 916 wird geprüft, ob die gemessene Temperatur 925 über 0°C liegt. Ist dies der Fall, folgt eine Mitteilung 917, dass die Ware zu warm ist und eine weitere Mitteilung 918, dass die Ware entsorgt werden muss.

Ist die Temperatur 925 kleiner als 0°C, folgt eine Mitteilung 919, dass die Messung ok war.

In beiden Fällen endet das Ablaufprogramm 912.

Vorzugsweise sobald die beiden Teilprozesse der Ablaufkarte 801 abgearbeitet sind, kann die Datenerfassung für eine Ware abgeschlossen werden. Dazu weist die Ablaufkarte 801 einen Abschluss-Identifikator 809 auf, der durch Lesen 920 ein Abschluss-Ablaufprogramm 921 startet.

Dieses Abschluss-Ablaufprogramm 921 ist in Fig. 8 dargestellt. Es stellt mittels der Sende-/Empfangseinrichtung 10 eine Datenverbindung 11 zu einer stationären Einheit 9 her und überträgt 922 die Ablauf-Ergebnisse der beiden Teilprozesse mit Bezug auf die Ware. Zum Abschluss wird eine Mitteilung abgespielt 54, dass die Übertragung erfolgt ist.

Ein Datenerfassungs-System 1 mit einer Messvorrichtung 5 zur Erfassung von Messwerten einer Messgröße und mit einer Mitteilungsvorrichtung 7 zur Mitteilung von Informationen weist eine Lesevorrichtung 4 zum Lesen von Identifikatoren 502 und eine Datenverarbeitungsvorrichtung 2 zur Ausführung von wenigstens einem Ablaufprogramm 501 auf, das durch Messwerte der Messvorrichtung 5 und/oder durch Identifikatoren 502 steuerbar ist. Durch Lesen eines Start-Identifikators 503 wird ein zugeordnetes Ablaufprogramm 601 gestartet, in dem Ablaufprogram 601 wird mindestens eine Benutzeraktion 604 und/oder eine Mitteilung 603 ausgeführt und auf eine abgeschlossene Benutzeraktion 604 oder Mitteilung 603 folgt eine weitere Benutzeraktion 604 oder Mitteilung 603 oder das Ablaufprogramm 501 wird beendet 605, wobei in jeder Benutzeraktion 604 eine Benutzereingabe erwartet wird, die Benutzereingabe als Benutzeraktions-Ergebnis zwischengespeichert wird und die Benutzeraktion 604 abgeschlossen wird, wobei eine Benutzereingabe durch Lesen eines Identifikators 502 mit der Lesevorrichtung 4 und/oder durch Erfassen einer Messgröße mit der Messvorrichtung 5 erfolgt.

### Bezugszeichenliste

- 1: Datenerfassungs-System
- 2: Datenverarbeitungsvorrichtung
- 3: Datenspeicher
- 4: Lesevorrichtung
- 5: Messvorrichtung
- 6: Lautsprecher
- 7: Anzeige
- 8: mobiles Messgerät
- 9: stationäre Einheit
- 10: Sende-/Empfangseinheit
- 11: Datenverbindung
- 12: Zwischenspeicher
- 13: Mikrofon
- 14: Einstichthermometer
- 15: Gehäuse
- 16: Federclip
- 17: Temperaturfühler
- 18: Ruheposition
- 19: Arbeitsposition
- 20: Angelpunkt
- 21: Temperaturwert
- 22: Batterieanzeige
- 23: Schallöffnung
- 24: Ein-/Ausschalter
- 501: Ablaufkarte
- 502: Identifikator
- 503: Start-Identifikator
- 504: Ja-Identifikator
- 505: Nein-Identifikator
- 601: Ablaufprogramm
- 602: Start
- 603: Mitteilung
- 604: Benutzeraktion
- 605: Ende
- 701: Ablaufprogramm
- 702: Start
- 703: Handlungsanweisung "Temp. messen"
- 704: Benutzeraktion "Temp. messen"
- 705: Ergebnis Temperaturwert
- 706: Verzweigung
- 707: Ja-Zweig
- 708: Nein-Zweig
- 709: Handlungsanweisung "Prüfen"
- 710: Benutzeraktion "Lesen"
- 711: Ergebnis
- 712: Mitteilung
- 713: Mitteilung
- 714: Ende
- 801: Ablaufkarte
- 802: Identifikator
- 803: Kontrolle der Verpackung
- 804: Kontrolle der Warentemperatur
- 805: Start-Identifikator
- 806: Hilfe-Identifikator
- 807: Ja-Identifikator
- 808: Nein-Identifikator
- 809: Abschluss-Identifikator
- 901: Ablaufprogramm "Verpackung prüfen"
- 902: Start
- 903: Handlungsanweisung "Prüfen"
- 904: Benutzeraktion "Prüfen"
- 905: Benutzeraktion "Beschädigung"
- 906: Mitteilung "Ende"
- 907: Handlungsanweisung "Beschädigung"
- 908: Mitteilung "Entsorgen"
- 909: Start
- 910: Hilfe-Ablaufprogramm
- 911: Hilfe-Information
- 912: Ablaufprogramm "Temp. prüfen"
- 913: Start
- 914: Handlungsanweisung "Temp. messen"
- 915: Benutzeraktion "Temp. messen"
- 916: Ergebnis
- 917: Mittteilung "zu warm"
- 918: Mitteilung "entsorgen"
- 919: Mitteilung "ok"
- 920: Start
- 921: Abschluss-Ablaufprogramm
- 922: Datenübertragung
- 923: Mitteilung "ok"
- 924: Ergebnis
- 925: Temperaturmesswert

## Patentansprüche

1. Verfahren zur Datenerfassung mit einem Datenerfassungs-System (1), **dadurch gekennzeichnet, dass** durch Lesen (602; 702; 902; 909; 920) eines Start-Identifikators (503;805) mit einer Lesevorrichtung (4) ein in einer Datenverarbeitungsvorrichtung (2) zugeordnetes Ablaufprogramm (601; 701; 901; 912) gestartet wird, in dem Ablaufprogramm (601; 701; 901; 912) mindestens eine Mitteilung (603; 703, 709, 712, 713, 714; 903, 906, 907, 908; 914, 917, 918, 919) ausgeführt wird und auf eine Mitteilung (603; 703, 709, 712, 713, 714; 903, 906, 907, 908; 914, 917, 918, 919) oder Benutzeraktion (604) eine weitere Benutzeraktion (604; 704, 710; 904, 905; 915) oder Mitteilung (603; 703, 709, 712, 713, 714; 903, 906, 907, 908; 914, 917, 918, 919) folgt oder das Ablaufprogramm (601; 701; 901; 912) beendet wird (605), wobei eine Benutzeraktion (604; 704, 710; 904, 905; 915) auf eine Eingabe wartet, die durch Lesen eines Identifikators (502; 802) mit der Lesevorrichtung (4) oder durch Erfassen eines Messwertes mit einer Messvorrichtung (5) erfolgt und die Eingabe die Benutzeraktion (604; 704, 710; 904, 905; 915) abschließt.

2. Verfahren nach Anspruch 1, **dadurch gekennzeichnet, dass** alle Benutzeraktions-Ergebnisse (705, 711; 916; 924, 925) des Ablaufprogramms zu einem Ablauf-Ergebnis miteinander verknüpft werden und/oder dass mit den Benutzeraktions-Ergebnissen (705, 711; 916; 924, 925) oder den Ablauf-Ergebnissen eine Positionsinformation und/oder Angaben zum Datum und/oder der Uhrzeit und/oder der Ort der Benutzereingabe und/oder zusätzliche Informationen verknüpft oder gespeichert werden.

3. Verfahren nach Anspruch 1 oder 2, **dadurch gekennzeichnet, dass** im Ablaufprogramm (601) eine Abfolge von Benutzeraktionen (604) und/oder Mitteilungen (603) fest vorgegeben ist und/oder von einem Benutzeraktions-Ergebnis abhängig ist.

4. Verfahren nach einem der Ansprüche 1 bis 3, **dadurch gekennzeichnet, dass** durch Lesen eines Abschluss-Identifikators (809) ein Abschluss-Ablaufprogramm (921) gestartet wird, das eine Datenerfassung abschließt, wobei alle zwischengespeicherten Benutzeraktions-Ergebnisse und/oder Ablauf-Ergebnisse an einen Datenspeicher übertragen werden (922).

5. Verfahren nach einem der Ansprüche 1 bis 4, **dadurch gekennzeichnet, dass** durch Lesen eines Hilfe-Identifikators (806) ein Hilfe-Ablaufprogramm (910) gestartet wird, das Hilfe-Informationen (911) durch die Mitteilungsvorrichtung mitteilt und/oder dass durch Lesen eines Parameter-Identifikators Betriebsparameter eines Ablaufprogramms einstellbar sind

6. Verfahren nach einem der Ansprüche 1 bis 5, **dadurch gekennzeichnet, dass** die Identifikatoren (502;802) als digitales Papier vorliegen.

7. Verfahren nach einem der Ansprüche 1 bis 6, **dadurch gekennzeichnet, dass** eine akustische Information aufgezeichnet wird, die als akustische Mitteilung für eine Handlungsanweisung gespeichert wird und/oder mit einem Ergebnis einer Benutzeraktion verknüpft und/oder gespeichert wird.

8. Datenerfassungs-System (1), mit einer Messvorrichtung (5) zur Erfassung von Messwerten einer Messgröße, mit einer Lesevorrichtung (4) zum Lesen von Identifikatoren (502), mit einer Mitteilungsvorrichtung (6, 7) zur Mitteilung von Informationen, mit einer Datenverarbeitungsvorrichtung (2) zur Ausführung von wenigstens einem Ablaufprogramm (601; 701; 901; 912), das durch Messwerte der Messvorrichtung (5) und/oder durch Identifikatoren (502) steuerbar ist, und mit einem Datenspeicher (3; 12) zum Speichern von Ergebnissen des Ablaufprogramms (601; 701; 901; 912).

9. Datenerfassungs-System nach Anspruch 8, **dadurch gekennzeichnet, dass** die Messvorrichtung (5) einen Temperatursensor, insbesondere einen Einstichtemperaturfühler (17), aufweist.

10. Datenerfassungs-System nach Anspruch 8 oder 9, **dadurch gekennzeichnet, dass** das Datenerfassungs-System als Mitteilungsvorrichtung einen Lautsprecher (6) zur Mitteilung von akustischen Informationen und/oder eine Anzeige (6) zur optischen Darstellung von Informationen aufweist.

11. Datenerfassungs-System nach einem der Ansprüche 8 bis 10, **dadurch gekennzeichnet, dass** die Lesevorrichtung (4) einen optischen Sensor zum Lesen von optischen Identifikatoren, insbesondere von Strichcodes, QR-Codes oder digitalem Papier, aufweist.

12. Datenerfassungs-System nach einem der Ansprüche 8 bis 11, **dadurch gekennzeichnet, dass** das Datenerfassungs-System (1) ein Mikrofon (13) zur Erfassung von akustischen Informationen aufweist.

13. Datenerfassungs-System nach einem der Ansprüche 8 bis 12, **dadurch gekennzeichnet, dass** das Datenerfassungs-System (1) ein mobiles Messgerät (8) und eine stationäre Einheit (9) aufweist, wobei das mobile Messgerät (8) die Messvorrichtung (5) und/oder die Mitteilungsvorrichtung (6,7) und/oder die Lesevorrichtung (4) aufweist und die stationäre Einheit (9) den Datenspeicher (3) und/oder die Datenverarbeitungsvorrichtung (2) aufweist.

14. Datenerfassungs-System nach einem der Ansprüche 8 bis 13, **dadurch gekennzeichnet, dass** das Datenerfassungs-System eine drahtlose Übertragungseinheit aufweist, mit der Daten zwischen dem mobilen Messgerät (8) und der stationären Einheit (9) austauschbar sind.

15. Datenerfassungs-System nach einem der Ansprüche 8 bis 13, das zur Verwendung in einem Verfahren nach einem der Ansprüche 1 bis 7 ausgebildet ist.
